# EUROPEAN PATENT SPECIFICATION

(11) **EP 2 695 553 B1**
(45) Date of publication and mention of the grant of the patent: **21.01.2015**
(21) Application number: 13177162.8
(22) Date of filing: 19.07.2013
(51) Int. Cl.: A47J 31/057

(54) **Boiler for an automatic coffee machine**
Boiler für automatische Kaffeemaschine
Chaudière pour machine à café automatique

(30) Priority: 06.08.2012 IT MI20120298 U
(43) Date of publication of application: 12.02.2014
(73) Proprietor: De'Longhi Appliances S.r.l., 31100 Treviso (IT)
(72) Inventor: De' Longhi, Giuseppe, 31100 Treviso (IT); Evangelisti, Paolo, 40138 Bologna (IT)
(74) Representative: Rapisardi, Mariacristina

(56) References cited:
- EP-A1- 0 342 516
- EP-A2- 0 299 146

## Description

The present invention refers to a boiler for an automatic coffee machine.

As is known, automatic coffee machines comprise at least one boiler for heating the water with which the infusion is made in a special infusion unit, where the load of coffee is placed.

The boilers utilised in automatic coffee machines vary in typology and some of the most widely-used comprise two monobloc aluminium-based pieces joined together along flat opposite surfaces having opposite grooves defining a spiral channel for circulation of the water.

These types of boilers have excellent electrical conductivity, but also several drawbacks, including the tendency to form calcium deposits along the water circulation channel, which in addition to affecting thermal conduction efficiency negatively, can cause deterioration of the organoleptic characteristics of the beverage produced.

The aluminium blocks are not only particularly exposed to the formation of calcium, but they also have poor resistance to the chemical action of descaling agents.

Moreover, this material is subject to stringent limitations of use in observance of current regulations concerning food compatibility.

EP 0342 516 A1 discloses a boiler for an automatic coffee machine according to the preamble of claim 1.

The technical task of the present invention is therefore that of realising a boiler for an automatic coffee machine that makes it possible to eliminate the reported technical drawbacks of the prior art.

Within the scope of this technical task, an aim of the invention is to realise a boiler for an automatic coffee machine that is highly efficient and particularly resistant to the formation and accumulation of calcium deposits.

The technical task, as well as the latter and other aims, according to the present invention, are achieved by realising a boiler for an automatic coffee machine, comprising a first block and a second block, both made of aluminium-based material and fixed one to the other, said first block having an internal wall facing an internal wall of said second block with which it delimits at least one channel for circulation of the water, at least one electric heating element for heating said channel being provided on an external wall at least of said first block, **characterised in that** said internal walls, at least in the areas thereof delimiting said channel, exhibit a ceramic coating having properties that protect against oxidation and reduce the formation of calcium deposits and/or calcium scale in the water circulation channel.

Additional characteristics of the present invention are also defined in the claims herein below.

Further characteristics and advantages of the invention will become more apparent from the description of a preferred, but not exclusive, embodiment of the boiler for an automatic coffee machine according to the invention, illustrated by way of indicative and non-limiting example in the accompanying drawings, in which:

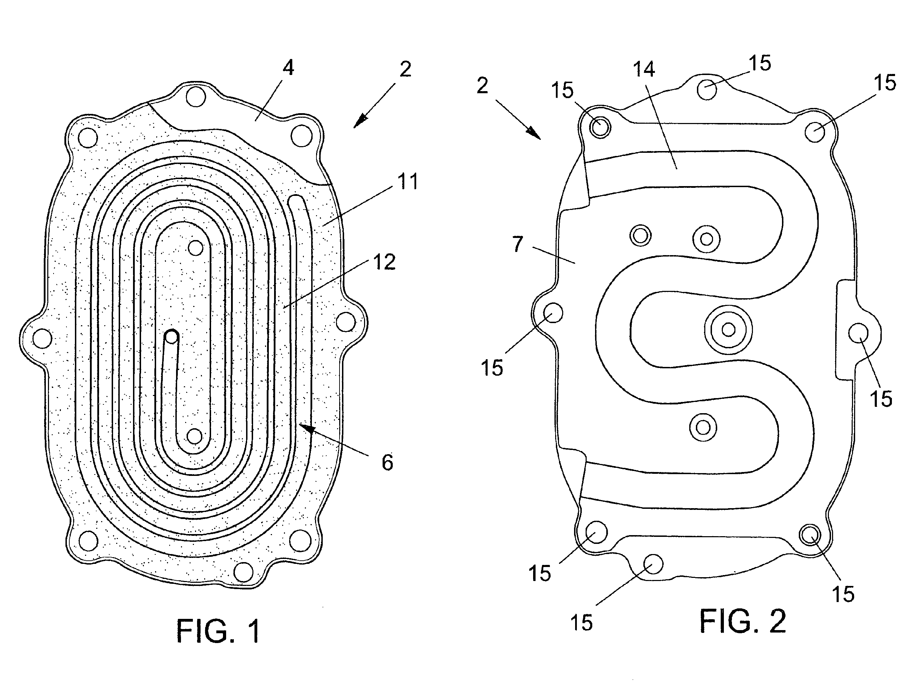

Figure 1 is a plan view from the inner side of one of the blocks making up the boiler;
Figure 2 is a plan view from the outer side of the block appearing in Figure 1;
Figure 3 is an exploded perspective view of the boiler; and
Figure 4 is a perspective view of the assembled boiler.

With reference to the figures cited, a boiler for an automatic coffee machine is shown and schematically indicated by the reference numeral 1.

The automatic coffee machine (not shown) has an infusion unit comprising an infusion chamber suitable for containing the dose of coffee, through which the infusion water passes for preparation of the beverage, and a circulation pump suitable for delivering the water suitably heated by the boiler 1 to the infusion unit. The boiler 1 comprises a first, thermally conductive block 2 and a second, thermally conductive block 3, both made of an aluminium-based material and fixed one to the other.

The first block 2 has an internal wall 4 that faces an internal wall 5 of the second block 3 with which it delimits at least one channel 6 for circulation of the water.

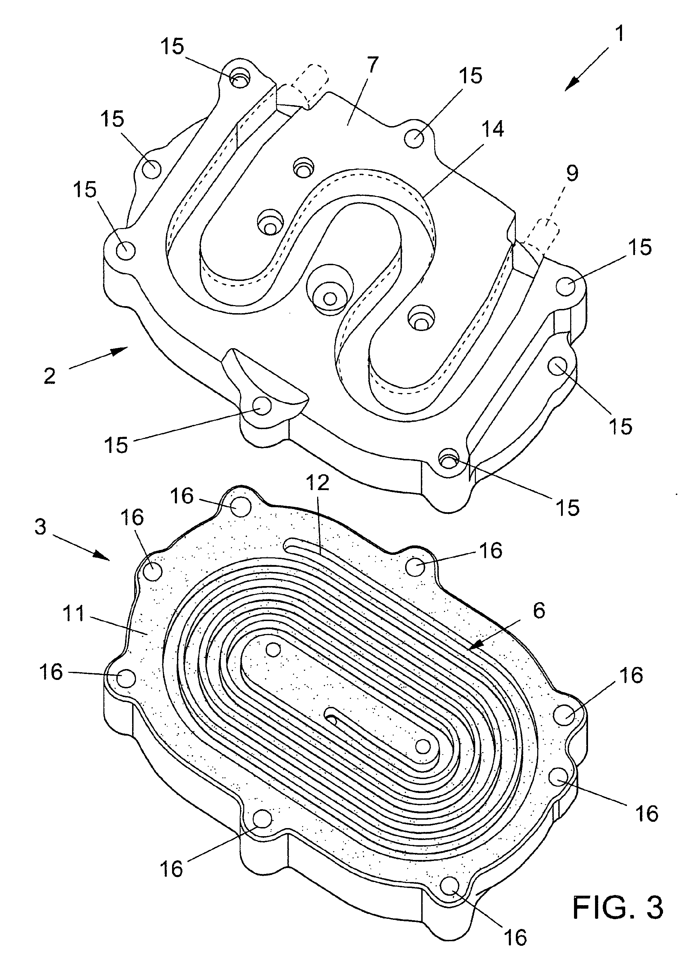

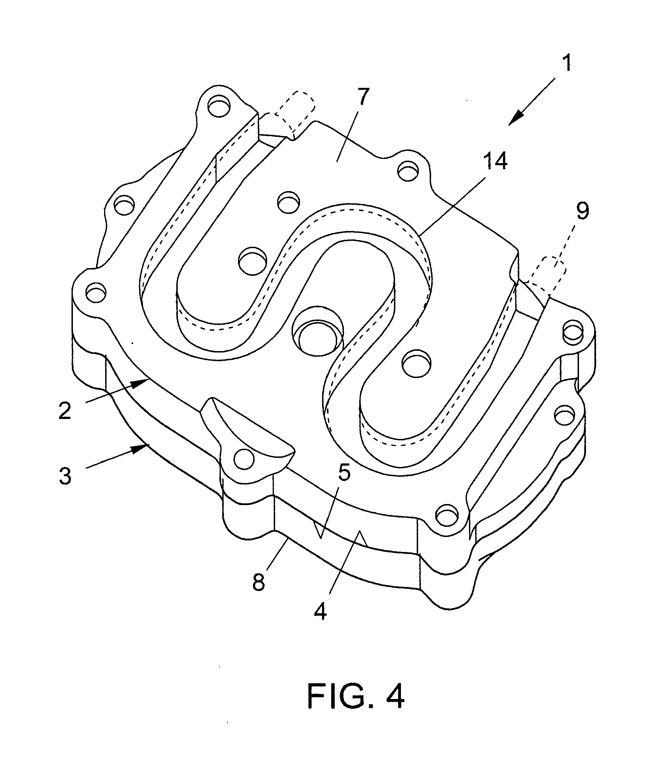

On an external wall 7 at least of the first block 2, and particularly also on an external wall 8 of the second block 3, a respective electric heating element (the electric heating element 9 of the first block 2 is indicated by the dashed line in Figures 3 and 4) is provided for heating the water circulation channel 6.

A salient feature of the boiler 1 consists in the fact that the internal walls 4, 5 of the blocks 2, 3, at least in the areas thereof delimiting the channel 6 for circulation of the water, exhibit a ceramic coating 11 having properties that protect against oxidation and reduce the formation of calcium deposits and/or calcium scale in the water circulation channel.

The ceramic coating 11 is preferably applied uniformly on the entire surface area of the internal walls 4, 5.

Moreover, the protective coating 11 is preferably in the form of a micrometric film of a thickness in the range of 10 to 100 µm.

The protective coating 11 is applied using the spray technique, which ensures the best results in terms of application uniformity.

Utilisation of a ceramic material comprising oxygen, silicon, carbon, aluminium and titanium for the protective coating 11 has been found to be convenient.

The blocks 2, 3 have flat, internal walls 4, 5 and preferably external walls 7, 8 that are also flat and parallel to the internal walls 4, 5.

More specifically, the blocks 2, 3 have the shape of flat plates that are specular with respect to contact plane thereof, which is defined by the internal walls 4, 5. The blocks 2, 3 are of a much smaller thickness than their width and depth, the thickness being defined as the distance between the respective internal, flat wall 4, 5 and the respective external, flat wall 7, 8.

The internal, flat walls 4, 5 of the blocks 2, 3 have opposite grooves (only the groove 12 in the block 2 is visible) that delimit the channel 6 for circulation of the water.

These grooves in the internal, flat walls 4, 5 of the blocks 2, 3 extend along a spiral path so as to give the water circulation channel 6 a spiral form suitable for achieving a maximum length of the water circulation channel 6 with a minimum of space occupied by the blocks 2, 3.

Inlet and outlet holes for the water from the channel 6 also pass through the blocks 2,3.

The external walls 7, 8 of the blocks 2, 3 have coil-shaped grooves (only the groove 14 in the block 2 is visible) to which the above-mentioned electric heating elements, advantageously of the tubular type and housed therein, are adjusted.

The configuration of the above-mentioned electric heating elements is also intended to concentrate the thermal heating energy supplied in a boiler 1 with blocks 2, 3 of reduced dimensions.

Lastly, the two blocks 2, 3 have respective holes 15, 16 at the perimeter for fastening bolts, which are not shown.

A sealing gasket, also not shown, is preferably interposed between the two blocks 2, 3 and circumscribes the channel 6 for circulation of the water.

Advantageously, owing to the presence of the coating on the water circulation channel, the boiler constituting the object of the present invention has properties of resistance to the depositing and accumulation of calcium on the walls of the channel, which are moreover protected from corrosion.

The coating itself does not substantially alter the heat exchange efficiency of the blocks 2, 3 and improves the compatibility of the boiler for use in heating water for foods.

The boiler thus conceived is susceptible to numerous modifications and variants, all of which falling within the scope of the inventive concept. Moreover, all the details may be replaced with technically equivalent elements.

The materials used, as well as the dimensions, may in practice be of any type, according to requirements and the state of the art.

## Claims

1. A boiler (1) for an automatic coffee machine, comprising a first block (2) and a second block (3), both made of aluminium-based material and fixed one to the other, said first block (2) having an internal wall (4) facing an internal wall (5) of said second block (3) with which it delimits at least one channel (6) for circulation of the water, at least one electric heating element (9) for heating said channel (6) being provided on an external wall (7) at least of said first block (2), **characterised in that** said internal walls (4, 5), at least in the areas thereof delimiting said channel (6), exhibit a ceramic coating (11) having properties that protect against oxidation and reduce the formation of calcium deposits and/or calcium scale in the water circulation channel.

2. The boiler (1) according to claim 1, **characterised in that** said coating (11) is applied uniformly on the entire surface area of said internal walls (4, 5).

3. The boiler (1) according to one or more of the preceding claims, **characterised in that** said coating (11) is in the form of a micrometric film.

4. The boiler (1) according to one or more of the preceding claims, **characterised in that** said coating (11) is applied by spraying.

5. The boiler (1) according to one or more of the preceding claims, **characterised in that** said coating (11) consists of a ceramic material comprising oxygen, silicon, carbon, aluminium and titanium.

6. The boiler (1) according to one or more of the preceding claims, **characterised in that** said internal walls (4, 5) are flat and have opposite grooves (12) that delimit said channel (6).

7. The boiler (1) according to one or more of the preceding claims, **characterised in that** said channel (6) extends in a spiral shape.

8. The boiler (1) according to one or more of the preceding claims, **characterised in that** said external wall (7) has a coil-shaped groove (14) to which said electric heating element (9), housed therein, is adjusted.

9. The boiler (1) according to one or more of the preceding claims, **characterised in that** said first and second block (2, 3) are joined with the interposition of a gasket that circumscribes said channel.

## Patentansprüche

1. Boiler (1) für automatische Kaffeemaschine, umfassend einen ersten Block (2) und einen zweiten Block (3), die beide aus einem aluminiumbasierten Material bestehen und aneinander befestigt sind, wobei der erste Block (2) eine Innenwand (4) aufweist, die einer Innenwand (5) des zweiten Blocks (3) zugewandt ist, mit der er mindestens einen Kanal (6) für die Wasserzirkulation begrenzt, mindestens ein elektrisches Heizelement (9) für das Erhitzen des Kanals (6), bereitgestellt an einer Außenwand (7) mindestens des ersten Blocks (2), **dadurch gekennzeichnet, dass** die Innenwände (4, 5) mindestens in deren Bereichen, die den Kanal (6) begrenzen, eine keramische Beschichtung (1) aufweisen, besitzend Eigenschaften, die vor Oxidation schützen und die Bildung von Kalkablagerungen und/oder Kalkresten im Wasserzirkulationskanal reduzieren.

2. Boiler (1) nach Anspruch 1, **dadurch gekennzeichnet, dass** die Beschichtung (11) gleichmäßig auf dem gesamten Oberflächenbereich der Innenwände (4, 5) aufgebracht wird.

3. Boiler (1) nach einem oder mehreren der vorhergehenden Ansprüche, **dadurch gekennzeichnet, dass** die Beschichtung (11) die Form eines mikrometrischen Films aufweist.

4. Boiler (1) nach einem oder mehreren der vorhergehenden Ansprüche, **dadurch gekennzeichnet, dass** die Beschichtung (11) durch Sprühen aufgebracht wird.

5. Boiler (1) nach einem oder mehreren der vorhergehenden Ansprüche, **dadurch gekennzeichnet, dass** die Beschichtung (11) aus einem keramischen Material, umfassend Sauerstoff, Silikon, Karbon, Aluminium und Titan, besteht.

6. Boiler (1) nach einem oder mehreren der vorhergehenden Ansprüche, **dadurch gekennzeichnet, dass** die Innenwände (4, 5) flach sind und gegenständig angeordnete Nuten (12) aufweisen, die den Kanal (6) begrenzen.

7. Boiler (1) nach einem oder mehreren der vorhergehenden Ansprüche, **dadurch gekennzeichnet, dass** sich der Kanal (6) in einer Spiralform erstreckt.

8. Boiler (1) nach einem oder mehreren der vorhergehenden Ansprüche, **dadurch gekennzeichnet, dass** die Außenwand (7) eine spulenförmige Nut (14) aufweist, zu der das elektrische Heizelement (9), das darin untergebracht ist, justiert wird.

9. Boiler (1) nach einem oder mehreren der vorhergehenden Ansprüche, **dadurch gekennzeichnet, dass** der erste und der zweite Block (2, 3) mit dem Einfügen einer Dichtung verbunden sind, die den Kanal umschreibt.

## Revendications

1. Chaudière (1) pour une machine à café automatique, comprenant un premier bloc (2) et un second bloc (3), tous deux étant fabriqués dans un matériau en aluminium et fixés l'un à l'autre, ledit premier bloc (2) ayant une cloison interne (4) faisant face à une cloison interne (5) dudit second bloc (3) avec laquelle il délimite au moins un canal (6) pour la circulation de l'eau, au moins un élément chauffant électrique (9) servant à chauffer ledit canal (6) étant prévu sur une cloison externe (7) dudit au moins premier bloc (2), **caractérisée en ce que** lesdites cloisons internes (4, 5), au moins dans les zones délimitant ledit canal (6), présentent un revêtement céramique (11) ayant des propriétés protégeant de l'oxydation et réduisant la formation de dépôts de calcium et/ou d'incrustations de calcium dans le canal de circulation d'eau.

2. Chaudière (1) selon la revendication 1, **caractérisée en ce que** ledit revêtement (11) est appliqué uniformément sur toute la surface desdites cloisons internes (4, 5).

3. Chaudière (1) selon l'une ou plusieurs des revendications précédentes, **caractérisée en ce que** ledit revêtement (11) se présente sous la forme d'un film micrométrique.

4. Chaudière (1) selon l'une ou plusieurs des revendications précédentes, **caractérisée en ce que** ledit revêtement (11) est appliqué par pulvérisation.

5. Chaudière (1) selon l'une ou plusieurs des revendications précédentes, **caractérisée en ce que** ledit revêtement (11) consiste en un matériau céramique comprenant de l'oxygène, du silicone, du carbone, de l'aluminium et du titane.

6. Chaudière (1) selon l'une ou plusieurs des revendications précédentes, **caractérisée en ce que** lesdites cloisons internes (4, 5) sont plates et possèdent des rainures opposées (12) délimitant ledit canal (6).

7. Chaudière (1) selon l'une ou plusieurs des revendications précédentes, **caractérisée en ce que** ledit canal (6) se développe en ayant la forme d'une spirale.

8. Chaudière (1) selon l'une ou plusieurs des revendications précédentes, **caractérisée en ce que** ladite cloison externe (7) possède une rainure en forme de spire (14) à laquelle ledit élément chauffant électrique (9), logé en son sein, est réglé.

9. Chaudière (1) selon l'une ou plusieurs des revendications précédentes, **caractérisée en ce que** lesdits premier et second bloc (2, 3) sont assemblés avec l'interposition d'un joint d'étanchéité circonscrivant ledit canal.
